# EUROPÄISCHE PATENTSCHRIFT

(11) **EP 1 287 273 B1**
(45) Veröffentlichungstag und Bekanntmachung des Hinweises auf die Patenterteilung: **05.10.2005**
(21) Anmeldenummer: 02727294.7
(22) Anmeldetag: 09.04.2002
(51) Int. Cl.: F16F 13/16, F16F 13/26

(54) **HYDRAULISCH DÄMPFENDES BUCHSENLAGER**
HYDRAULICALLY DAMPING SLEEVE BEARING
PALIER A COUSSINET-DOUILLE A AMORTISSEMENT HYDRAULIQUE

(30) Priorität: 11.04.2001 DE 10118229
(43) Veröffentlichungstag der Anmeldung: 05.03.2003
(73) Patentinhaber: ZF Lemförder Metallwaren AG, 49441 Lemförde (DE)
(72) Erfinder: VOSSEL, Andreas, 49086 Osnabrück (DE); RODENBERG, Andreas, 31603 Diepenau (DE)
(86) Internationale Anmeldenummer: PCT/DE2002/001304
(87) Internationale Veröffentlichungsnummer: WO 2002/084143

(56) Entgegenhaltungen:
- US-A- 5 123 635
- US-A- 5 165 669
- US-A- 5 375 822
- US-A- 5 690 320
- US-A- 6 102 380
- PATENT ABSTRACTS OF JAPAN vol. 013, no. 170 (M-817), 21. April 1989 (1989-04-21) & JP 01 003342 A (TOKAI RUBBER IND LTD), 9. Januar 1989 (1989-01-09)
- PATENT ABSTRACTS OF JAPAN vol. 011, no. 135 (M-585), 28. April 1987 (1987-04-28) & JP 61 274130 A (TOKAI RUBBER IND LTD), 4. Dezember 1986 (1986-12-04)
- PATENT ABSTRACTS OF JAPAN vol. 011, no. 135 (M-585), 28. April 1987 (1987-04-28) & JP 61 274131 A (TOKAI RUBBER IND LTD), 4. Dezember 1986 (1986-12-04)
- PATENT ABSTRACTS OF JAPAN vol. 010, no. 372 (M-544), 11. Dezember 1986 (1986-12-11) & JP 61 165040 A (TOKAI RUBBER IND LTD), 25. Juli 1986 (1986-07-25)

## Beschreibung

Die Erfindung betrifft ein hydraulisch dämpfendes Buchsenlager nach dem Oberbegriff von Anspruch 1.

Zur Dämpfung von Schwingungen und zur Aufnahme von Kräften werden Lager unterschiedlichster Bauformen, vornehmlich Gummilager vielfältig eingesetzt. In der Automobilindustrie dienen sie beispielsweise zur Lagerung von Teilen der Radaufhängung oder der Antriebsaggregate der Fahrzeuge. Dabei ist es je nach Einsatzfall bekannt, die dämpfende Wirkung elastomerer Dämpfungsglieder durch eine hydraulische Dämpfung (sogenannte Massedämpfung) zusätzlich zu unterstützen. Zur Nutzung des von der Flüssigkeitsmasse hervorgerufenen Tilgereffektes werden in den elastomeren Einsatzteilen beziehungsweise Gummikörpern der Lager Kammern zur Aufnahme eines fluiden Dämpfungsmittels vorgesehen. Die Kammern, deren Größe und Position im Lager von der geforderten Abstimmung abhängt, werden durch einen oder mehrere, in speziellen zusätzlich in das Lager integrierten Formteilen ausgebildete Kanäle strömungsleitend miteinander verbunden. Je nach Beanspruchung des Lagers wird so das Dämpfungsmittel von einer Kammer in eine andere gedrückt. Hierbei sind sowohl Lager bekannt geworden bei denen die hydraulische Dämpfung in Bezug auf radial in das Lager eingetragene Kräfte genutzt wird als auch solche, bei denen vornehmlich die axiale Dämpfung durch die Dämpfungsflüssigkeit unterstützt wird. Auch Lager bei denen der Tilgereffekt des Dämpfungsmittels in axialer und radialer Richtung genutzt wird sind bekannt.

Ein Beispiel hierfür wird in der DE 41 17 129 A1 offenbart. Die Schrift beschreibt ein hydraulisch dämpfendes Lager mit einem Lagerkern, einer diesen mit radialen Abstand umgebenden Lagerhülse und einem dazwischen eingeordneten elastomeren Einsatz mit zwei in Achsrichtung übereinander liegenden Gruppen dämpfungsmittelgefüllter Kammern. Durch wendelförmige Nuten im Außenumfang des Lagerkerns werden diagonal durch das Lager geführte Drosselkanäle ausgebildet, welche alle Kammern untereinander verbinden. Je nach der Beanspruchung zirkuliert die Dämpfungsflüssigkeit zwischen den untereinander verbundenen Kammern. Die beschriebene Ausbildungsform eines Lagers bewirkt auf diese Weise eine hydraulische Dämpfung sowohl in radialer als auch in axialer Richtung, ist jedoch hinsichtlich ihrer Bauweise relativ aufwendig. Wie auch von anderen Lagern des Standes der Technik bekannt, wirkt der elastomere Einsatz gleichzeitig als Trag- und Hydraulikteil. Im Hinblick auf den im Allgemeinen nur geringen zur Verfügung stehenden Bauraum ist bei solchen Lagern die Dämpfung im Buchsenbereich bei hohen statischen Forderung vergleichsweise gering.

Die US-A-5,165,669 zeigt als nächstliegender Stand der Technik ein hydraulisch dämpfendes Buchsenlager, bei dem ein inneres Gummilager, welches ein im Wesentlichen zylindrisches Innenteil mit einer axialen Durchgangsbohrung, eine das Innenteil umgebende Außenhülse sowie ein zwischen dem Innenteil und der Außenhülse angeordnetes und mit dem Innenteil und der Außenhülse durch Vulkanisation verbundenes elastomeres Dämpfungsglied aufweist. Das Buchsenlager ist an seinen axialen Enden von Kammern zur Aufnahme eines fluiden Dämpfungsmittels umgeben, wobei die Kammern von einem Hydraulikbereich gebildet werden, welcher um das Gummilager herum angeordnet ist. Der Hydraulikbereich weist dabei einen auf die Außenhülse des Gummilagers aufgeschobenen starren Kanalträger mit einem Kanal zur strömungsleitenden Verbindung der Kammern, eine sich axial auf dem Kanalträger abstützende Außenbuchse und axial beidseitig des Gummilagers angeordnete Mittel zum Verschließen des Buchsenlagers auf. Diese Mittel bestehen aus einem mit dem elastomeren Dämpfungsglied einstückig verbundenen Elastomer, in dessen radial äußeren Bereich ein Stützring einvulkanisiert ist, über welchen sich die Außenbuchse an dem Kanalträger abstützt.

Weiterhin ist aus der US-A-5,690,320 ein hydraulisch dämpfendes Buchsenlager mit einem elastomeren Dämpfungsglied, welches durch Vulkanisation mit einem im wesentlichen zylindrischen mehrteiligen Innenteil und einer Außenhülse verbunden ist, welche zusammen ein inneres Gummilager bilden, bekannt. An seinen axialen Enden ist das Buchsenlager von Kammern zur Aufnahme eines fluiden Dämpfungsmittels umgeben, wobei die Kammern von einem um das Gummilager herum angeordneten Hydraulikbereich gebildet werden, welcher einen auf die Außenhülse des Gummilagers aufgesetzten starren Kanalträger mit einem Kanal zur strömungsleitenden Verbindung der Kammern und eine sich axial auf dem Kanalträger abstützende mehrteilige Außenbuchse aufweist. Axial beidseitig des Gummilagers sind Mittel angeordnet, die das Buchsenlager verschließen, wobei diese Mittel im wesentlichen aus einem Elastomer bestehen, welches mit dem mehrteiligem Innenteil durch Vulkanisation einstückig verbunden ist und in seinem radial äußeren Bereich einen einvulkanisierten Stützring aufweist, über welchen sich die Außenbuchse am Kanalträger abstützt.

Aufgabe der Erfindung ist es insbesondere, ein hydraulisch dämpfendes Buchsenlager zu schaffen, welches die Herstellung von Lagern mit geringen Abmessungen ermöglicht. Die Aufgabe besteht weiterhin darin, das Lager so zu gestalten, dass es trotz einer einfachen Grundbauform während der Fertigung mit geringem Aufwand hinsichtlich des Dämpfungsverhaltens beziehungsweise seiner Abstimmung flexibel an unterschiedliche Einsatzzwecke angepasst werden kann.

Die Aufgabe wird durch ein Lager mit den Merkmalen des Hauptanspruchs gelöst. Vorteilhafte Aus- beziehungsweise Weiterbildungen des Lagers sind durch die Unteransprüche gegeben.

Erfindungsgemäß besteht das Lager quasi aus zwei separaten Lagerteilen, nämlich aus einem inneren Gummilager und einen um dieses Gummilager herumgebauten Hydraulikbereich. Das innere Gummilager ist in an sich bekannter Weise aufgebaut und weist ein mit einer axialen Durchgangsbohrung versehenes Innenteil, eine konzentrisch um dieses Innenteil angeordnete zylindrische Außenhülse sowie ein zwischen dem Innenteil und der Außenhülse eingeordnetes, mit dem Innenteil und der Außenhülse durch Vulkanisation verbundenes elastomeres Dämpfungsglied auf.

Durch den separat um das Gummilager herum angeordneten Hydraulikbereich werden um die axialen Enden dieses inneren Lagers Kammern zur Aufnahme eines fluiden Dämpfungsmittels ausgebildet. Hierzu kann der Hydraulikbereich aus einem starren, auf die Außenhülse des Gummilagers aufgeschobenen Kanalträger mit einem darin ausgebildeten Kanal zur strömungsleitenden Verbindung der Kammern, einer sich axial auf diesen Kanalträger abstützenden Außenbuchse und axial beidseitig des Gummilagers angeordneten separaten Mitteln zum axialen Verschließen der gesamten Baueinheit bestehen. Die das Lager axial verschließenden separaten Elemente können zumindest in einem radial äußeren Bereich aus einem Elastomer bestehen, in das ein Stützring einvulkanisiert ist, über welchen sich die Außenbuchse gegen den Kanalträger abstützt.

Als Tragteil für den äußeren Hydraulikbereich dient ausschließlich der starre Kanalträger, an dem die Außenbuchse zumindest partiell zur Anlage kommt beziehungsweise auf dem sich die Außenbuchse des Lagers abstützt. Die axiale Dämpfung ist insoweit unabhängig von der Beschaffenheit des inneren Gummilagers. Durch die separate Ausführung der beiden Lagerkomponenten ist es aber möglich, das Lager hinsichtlich seines Dämpfungsverhaltens sehr flexibel zu gestalten beziehungsweise es bei der Fertigung entsprechend abzustimmen. Bei im Grunde gleichen axialen Dämpfungsverhalten kann das radiale Dämpfungsverhalten dadurch variiert werden, dass je nach vorgesehenem Einsatzzweck unterschiedlich ausgebildete und dimensionierte innere Gummilager mit dem Hydraulikbereich umbaut werden.

Die Mittel zum axialseitigen Verschließen des Buchsenlagers sind'gemäß einer möglichen Ausgestaltung der Erfindung jeweils durch eine Abdeckscheibe mit einer daran anvulkanisierten, elastomeren, sich radial bis zur Außenbuchse erstreckenden Membran gebildet. Dabei sind die Ringe, über welche sich die Außenbuchse an dem auf die Außenhülse des inneren Gummilagers aufgeschobenen Kanalring abstützt, in einen axial verlaufenden, an der Außenbuchse anliegenden Abschnitt integriert. Entsprechend einer praxisgerechten Ausführung weist das Innenteil des Gummilagers dazu an seinen axialen Enden einen Absatz auf, auf welchen die zum axialen Verschließen des Lagers dienenden, als eine Lochscheibe ausgebildeten Abdeckscheiben mit dem Rand ihrer Bohrungen aufliegen. Die Bohrung jeder Abdeckscheibe umgibt dabei die Durchgangsbohrung des inneren Lagers konzentrisch. Bei der Außenbuchse handelt es sich vorteilhafterweise um eine Hülse, welche beispielsweise auf die aus dem Innenlager und dem Kanalträger bestehende innere Struktur aufgepresst ist und an ihren axialen Enden eine Axialsicherung aufweist. Dabei kann es sich um eine auf der Kante des von der Membran der Verschlussmittel eingeschlossenen Stützrings aufliegende Umbördelung des Randes der Außenbuchse handeln.

Denkbar wäre es ferner, eine Außenbuchse mit abschnittsweise unterschiedlicher Wandstärke zu verwenden, die an ihren axialen Enden einen an dem Stützring zur Anlage kommenden Absatz aufweist.

Bei einer besonders vorteilhaften Weiterbildung des Buchsenlagers ist der auf die Außenhülse aufgeschobene Kanalträger zweigeteilt, wobei eine Teilung quer zur Längsachse des Buchsenlagers von besonderem Vorteil ist. Dabei sind die beiden Kanalträgerteile so ausgebildet, dass während der Fertigung beziehungsweise während ihrer Montage durch eine Verdrehung der Kanalträgerteile gegeneinander die effektive Länge des später die axial äußeren Kammern verbindenden Kanals festgelegt werden kann. Hierdurch ist das axiale Dämpfungsverhalten des Lagers sehr flexibel einstellbar.

Entsprechend einer weiteren vorteilhaften Ausführungsform des erfindungsgemäßen Lagers ist das Innenlager ebenfalls als hydraulisch dämpfendes Lager ausgebildet. Dazu sind, wie von hydraulischen dämpfenden Gummilagern des Standes der Technik bekannt, in dem elastomeren Dämpfungsglied zusätzliche Kammern zur Aufnahme eines Dämpfungsmittels ausgebildet. Diese werden durch einen Kanal miteinander verbunden, zu dessen Ausbildung ein weiterer Kanalträger zwischen dem Tragkörper des Gummilagers, also dessen elastomeren Dämpfungsglied und seiner Außenhülse eingeordnet ist. Unter Beibehaltung des grundsätzlichen Prinzips dämpft der äußere Hydraulikbereich des Buchsenlagers vornehmlich axial eingetragene Kräfte, während das innere Gummilager, in diesem Falle unterstützt durch eine hydraulische Massedämpfung, vorzugsweise in der radialen Richtung dämpfend wirkt. Darüber hinaus ist es möglich, das radiale Dämpfungsverhalten des Lagers durch unterschiedliche Gestaltungen seines Innenteils zu beeinflussen. Beispielsweise kann durch abschnittsweise Abflachungen des dem Grunde nach zylindrischen Innenteils und sich bei Beibehaltung der zylindrischen Form seiner Außenhülse ergebende unterschiedliche Gummihöhen ein in Umfangsrichtung variierendes Kennungsverhalten erreicht werden.

Der besondere Vorteil der Erfindung ist darin zu sehen, dass auf Grund des separaten Hydraulikbereichs sehr geringe Bauhöhen erreicht werden. Durch den starren Kanalträger wird dabei eine sehr große Wirkfläche erzielt, die je nach Auslegung des Lagers bis um den Faktor 10 größer ist als bei den herkömmlichen Lagern, bei denen das Hydraulikteil gleichzeitig als Tragteil wirkt. Die mögliche Kalibrierung des Gummilagers führt außerdem zu einer deutlich größeren Lebensdauer und sie lässt sehr geringe Gummihöhen zu, da die stets vorhandenen Schrumpfspannungen gegenüber den Verhältnissen bei Lagern herkömmlicher Bauweise deutlich verringert werden.

Die Erfindung soll nachstehend anhand eines Ausführungsbeispiels näher erläutert werden. In den zugehörigen Zeichnungen zeigen
- Figur 1:: Einen Längsschnitt durch eine mögliche Ausführungsform des erfindungsgemäßen Lagers.
- Figur 2:: einen Längsschnitt durch eine Ausführungsform deren Innenlager eine hydraulische Massendämpfung aufweist.
- Figur 3:: eine mögliche Ausbildungsform des die Außenbuchse axial abstützen Kanalträgers

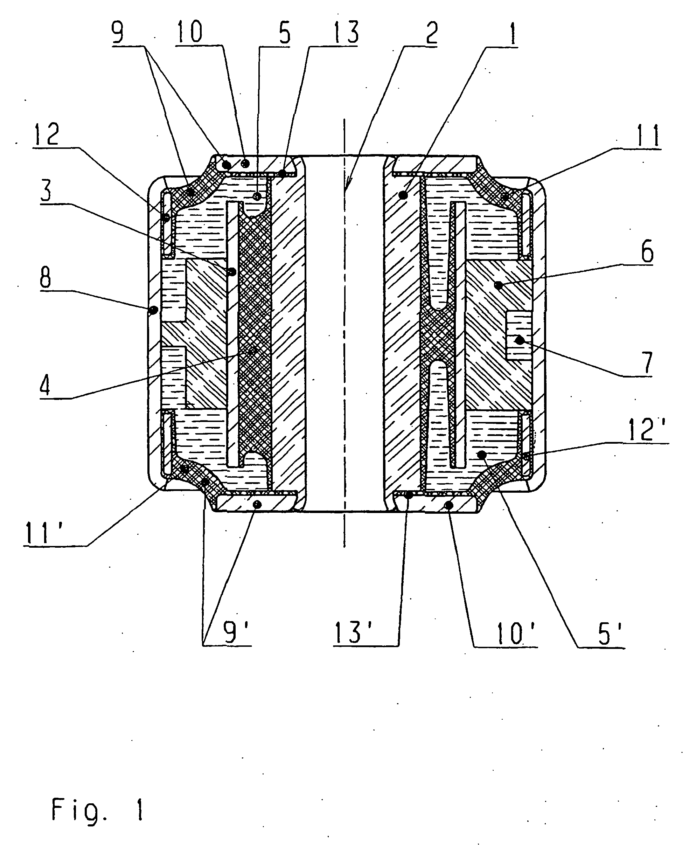

Durch die Figur 1 wird der grundsätzliche erfinderische Aufbau des Buchsenlagers veranschaulicht. Deutlich zu erkennen ist, dass das Lager im Wesentlichen aus zwei separaten Lagerteilen besteht, nämlich einem inneren Gummilager und einem um dieses Gummilager herum angeordneten, also quasi um dieses Gummilager herumgebauten Hydraulikbereich. Das Gummilager besteht in an sich bekannter Weise aus einem zylindrischen Innenteil 1 mit einer axialen Durchgangsbohrung 2, einer das Innenteil 1 umgebenden Außenhülse 3 und dem zwischen Innenteil 1 und Außenhülse 3 eingeordneten und mit ihnen durch Vulkanisation verbundenen elastomeren Dämpfungsglied 4. Diese ein eigenständiges Lager ausbildende Anordnung ist von dem Hydraulikbereich umgeben. Wie ersichtlich, besteht der Hydraulikbereich aus einem auf die Außenhülse 3 des inneren Gummilagers aufgeschobenen Kanalträger 6, einer sich auf diesem Kanalträger 6 abstützenden Außenbuchse 8 und Mitteln 9, 9' zum axialen Verschließen der gesamten Baueinheit. Bei diesen Mitteln 9, 9' handelt es sich um Abdeckscheiben 10, 10', an welche jeweils eine elastomere Membran 11, 11' anvulkanisiert ist. Die zur Abdeckung dienenden Lochscheiben 10, 10' liegen in dem dargestellten Ausführungsbeispiel mit dem Rand ihrer Bohrung auf einem hierfür an dem Innenteil 1 des Gummilagers vorgesehenen Absatz 13, 13' auf. Wie aus der Abbildung ersichtlich, erstrecken sich die mit den Abdeckscheiben 10, 10' durch Vulkanisation verbundenen Membranen 9, 9' in axialer Richtung bis an die Innenfläche der Außenbuchse 8 und liegen dort mit einem in axialer Richtung verlaufenden Abschnitt an deren Innenkontur an. In den radial äußeren Bereich jeder Membran 9, 9', genauer gesagt in den an der Innenkontur der Außenbuchse 8 anliegenden Abschnitt ist jeweils ein Stützring 12, 12' einvulkanisiert. Über die Stützringe 12, 12' stützt sich die Außenbuchse 8 auf dem Kanalträger 6 ab. Bei dem im Beispiel gezeigten Lager wurde die Außenbuchse 8 auf die durch das innere Gummilager und den auf dessen Außenhülse 3 aufgeschobenen Kanalträger 6 gebildete Struktur aufgepresst und anschließend im Bereich ihrer axialen Enden umgebördelt. Die Umbördelung wirkt hierbei als Axialsicherung 21. Zwischen dem Kanalträger 6, der Außenbuchse 8 und den beidseits an den axialen Enden der Außenbuchse 8 angeordneten und von der Axialsicherung 21 umfassten Gummimembranen 11, 11' sind die Kammern 5, 5' zur Aufnahme des Dämpfungsmittels ausgebildet. Sie sind über einen im Kanalträger 6 ausgebildeten Kanal 7 strömungsleitend miteinander verbunden. Bei einer axialen Belastung bewegt sich der Hydraulikbereich des Lagers in axialer Richtung ausschließlich in der Membran 11, 11'. Der Kanalträger 6 dient dabei als abstützendes Glied, während der Tragkörper des inneren Lagers auf das axiale Dämpfungsverhalten im Grunde keinen Einfluss hat. Das axiale Dämpfungsverhalten wird vielmehr lediglich durch die Abstimmung des Hydraulikbereiches und seine Bewegung in den Membranen 11, 11' bestimmt. Durch die axiale Bewegung des Hydraulikteils wird die an der Seite der Krafteinwirkung ausgebildete Kammer 5, 5' zusammengedrückt und das dort vorhandene Dämpfungsmittel über den Kanal 7 in die gegenüberliegende Kammer 5, 5' gedrückt. Die Dämpfungswirkung der hieraus resultierenden Massedämpfung wird unter anderem von der effektiven Kanallänge des die Kammern 5, 5' miteinander verbindenden Kanals 7 bestimmt.

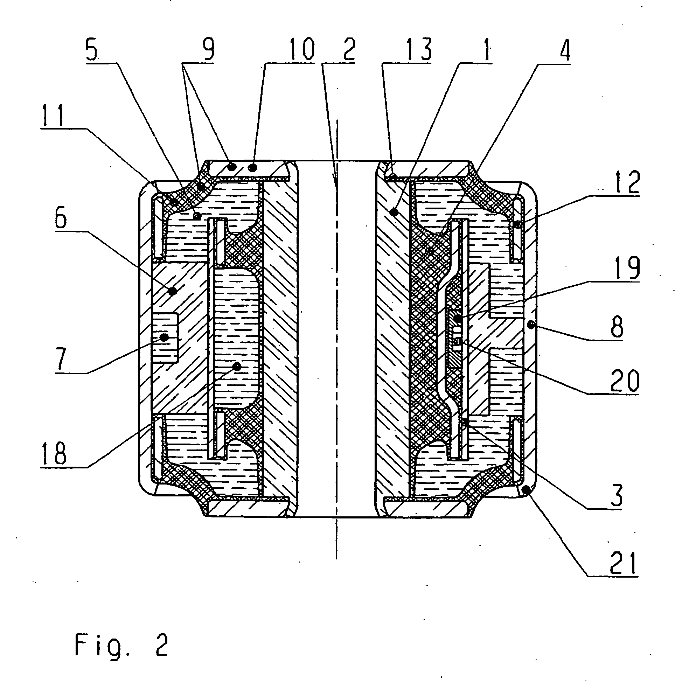

In der Figur 2 ist eine andere Variante des erfindungsgemäßen Lagers dargestellt. Hierbei handelt es sich um ein Lager, bei dem auch das innere Lagerteil hydraulisch gedämpft ist. Dazu sind in dem das Innenteil 1 mit der Außenhülse 3 des inneren Lagers miteinander verbindenden Gummi 4 zusätzliche Kammern 18 ausgebildet. Diese Kammern 18 sind durch den Kanal 20 eines weiteren, zwischen dem Dämpfungsglied 4 und der Außenhülse 3 des inneren Lagers eingeordneten Kanalträgers 19 strömungsleitend miteinander verbunden. Das innere Lager wirkt über die Beschaffenheit und Dimensionierung seines elastomeren Dämpfungsgliedes 4 sowie durch die zusätzliche Massedämpfung des fluiden Dämpfungsmittels in radialer Richtung dämpfend. Der äußere Lagerbereich (Hydraulikbereich) wirkt dagegen unabhängig vom Dämpfungsverhalten des inneren Lagers und dient ausschließlich zur Dämpfung axial eingetragener Kräfte. Durch eine von der Zylinderform abweichende Ausbildung des Innenteils 1 (beispielsweise mit einander gegenüberliegenden abgeflachten Seiten) kann ein in Umfangsrichtung unterschiedliches Kennungsverhalten des inneren Lagers erreicht werden.

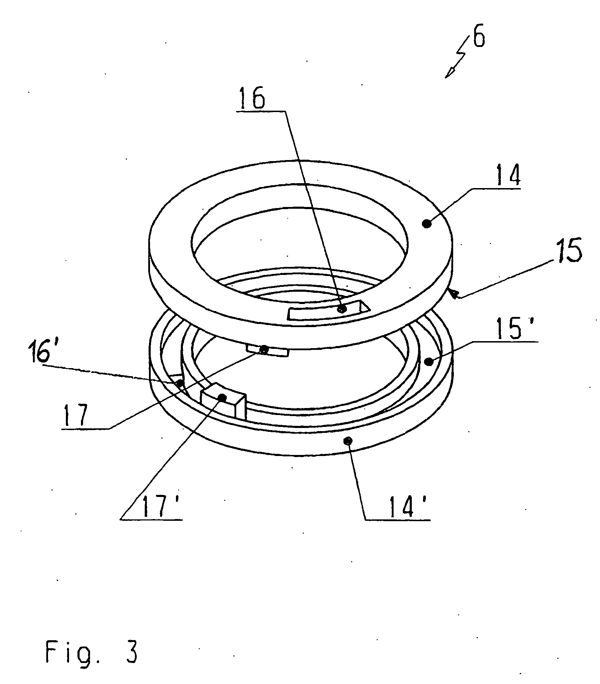

Durch die Figur 3 wird eine spezielle Ausführungsform des auf die Außenhülse 3 des inneren Gummilagers aufzuschiebenden Kanalträgers 6 dargestellt. Der Kanalträger 6 ist hierbei in axialer Richtung zweigeteilt ausgebildet. Er besteht aus zwei Ringen 14, 14', bei denen jeweils in eine axiale Außenfläche eine Nut 15, 15' eingearbeitet ist. Die Nut 15, 15' weist an einer Stelle einen Durchbruch 16, 16' zu der axial gegenüberliegenden Seite des Ringes 14, 14' auf. Außerdem ragt an der Kante dieses Durchbruchs 16, 16' ein Führungs- und Anschlagelement 17, 17' axial aus der Nut 15, 15' heraus. Zur Bildung des Kanalträgers 6 werden die Ringe 14, 14', wie in der Abbildung ersichtlich, mit den in sie eingearbeiteten Nuten 15, 15', einander zugewandt, zusammengebracht. Je nachdem, in welcher Lage sich dabei die in den Ringen 14, 14' vorgesehenen Durchbrüche 16, 16' zueinander befinden, kann die effektive Kanallänge unterschiedlich eingestellt werden. Für den Fachmann wird ersichtlich, dass das fluide Dämpfungsmittel bei dem zusammengefügten Buchsenlager über die Durchbrüche 16, 16' aus den axial angeordneten Kammern 5, 5' austritt oder in diese eintritt. Durch eine unterschiedliche Stellung der Durchbrüche 16, 16' zueinander und die daraus resultierende variable Kanallänge kann das Lager während der Fertigung im Hinblick auf sein axiales Dämpfungsverhalten abgestimmt werden.

### Liste der verwendeten Bezugszeichen

- 1: Innenteil
- 2: Durchgangsbohrung
- 3: Außenhülse
- 4: elastomeres Dämpfungsglied (Gummi)
- 5, 5': Kammer
- 6: Kanalträger
- 7: Kanal
- 8: Außenbuchse
- 9, 9': Mittel zum axialen Verschließen
- 10, 10': Abdeckscheibe (Lochscheibe)
- 11, 11': Membran
- 12, 12': Stützring
- 13, 13': Absatz
- 14, 14': Ring (Kanalträgerteil)
- 15, 15': Nut
- 16, 16': Durchbruch
- 17, 17': Führungs- und Anschlagelement
- 18: Kammer
- 19: Kanalträger
- 20: Kanal
- 21: Axialsicherung

## Patentansprüche

1. Hydraulisch dämpfendes Buchsenlager, bei dem ein inneres Gummilager, welches ein im Wesentlichen zylindrisches oder der Zylinderform angenähertes Innenteil (1) mit einer axialen Durchgangsbohrung (2), eine das Innenteil (1) umgebende Außenhülse (3) sowie ein zwischen dem Innenteil (1) und der Außenhülse (3) eingeordnetes und mit dem Innenteil (1) und der Außenhülse (3) durch Vulkanisation verbundenes elastomeres Dämpfungsglied (4) aufweist, an seinen axialen Enden von Kammern (5,5') zur Aufnahme eines fluiden Dämpfungsmittels umgeben ist, **dadurch gekennzeichnet, dass** die Kammern (5, 5') von einem separat um das Gummilager herum angeordneten Hydraulikbereich gebildet werden, welcher einen auf die Außenhülse (3) des Gummilagers aufgeschobenen starren Kanalträger (6) mit einem Kanal (7) zur strömungsleitenden Verbindung der Kammern (5, 5'), eine sich axial auf dem Kanalträger abstützende Außenbuchse (8) und axial beidseitig des Gummilagers angeordnete separate Mittel (9, 9') zum Verschließen des Buchsenlagers aufweist, wobei die separaten Mittel (9, 9') aus einem Elastomer bestehen, in dessen radial äußerem Bereich ein Stützring (12, 12`) einvulkanisiert ist, über welchen sich die Außenbuchse (8) an dem Kanalträger (6) abstützt.

2. Hydraulisch dämpfendes Buchsenlager nach Anspruch 1, **dadurch gekennzeichnet, dass** die axial beidseitig angeordneten Mittel (9, 9') zum Verschließen des Buchsenlagers jeweils durch eine Abdeckscheibe (10, 10') mit einer daran anvulkanisierten elastomeren, sich radial zur Außenbuchse (8) erstreckenden Membran (11, 11') gebildet sind, wobei der Stützring (12, 12') in einen an der Außenbuchse (8) anliegenden, axial verlaufenden Abschnitt der Membran einvulkanisiert ist.

3. Hydraulisch dämpfendes Buchsenlager nach Anspruch 2, **dadurch gekennzeichnet, dass** das Innenteil (1) des Gummilagers an seinen axialen Enden einen Absatz (13, 13') aufweist, auf welchem die als Lochscheibe ausgebildeten Abdeckscheiben (10, 10') mit dem Rand ihrer die Durchgangsbohrung (2) des Innenteils (1) konzentrisch umgebenden Bohrung aufliegen

4. Hydraulisch dämpfendes Buchsenlager nach einem der Ansprüche 1 bis 3, **dadurch gekennzeichnet, dass** die Außenbuchse (8) durch eine auf das innere Gummilager und den auf dessen Außenhülse aufgeschobenen Kanalträger (6) aufgepresste metallische Hülse ausgebildet ist, welche an ihren axialen Rändern eine Axialsicherung (21) aufweist.

5. Hydraulisch dämpfendes Buchsenlager nach einem der Ansprüche 1 bis 4, **dadurch gekennzeichnet, dass** der auf die Außenhülse (8) des inneren Lagers aufgeschobene Kanalträger (6) des Hydraulikbereiches zweigeteilt ist, wobei durch den Grad der Verdrehung beider Kanalträgerteile (14, 14') gegeneinander während der Fertigung des Lagers die effektive Kanallänge und somit das axiale Dämpfungsverhalten des Buchsenlagers festlegbar ist.

6. Hydraulisch dämpfendes Buchsenlager nach einem Anspruch 5, **dadurch gekennzeichnet, dass** der auf die Außenhülse (8) des inneren Lagers aufgeschobene Kanalträger (6) des Hydraulikbereiches in einer Ebene quer zur Längsachse des Buchsenlagers zweigeteilt ist, wobei durch den Grad der Verdrehung beider Kanalträgerteile (14, 14') gegeneinander während der Fertigung des Lagers die effektive Kanallänge und somit das axiale Dämpfungsverhalten des Buchsenlagers festlegbar ist.

7. Hydraulisch dämpfendes Buchsenlager nach Anspruch 6, **dadurch gekennzeichnet, dass** das der Kanalträger (6) des Hydraulikbereiches aus zwei Ringen (14, 14') besteht, in die auf jeweils einer Axialseite eine Nut (15) eingearbeitet ist, welche in einem Abschnitt ihres Verlaufs einen den jeweiligen Ring (14, 14') axial durchragender Durchbruch (16, 16') aufweist, wobei die Ringe (14, 14') zur Ausbildung des Kanalträgers (6) mit ihren die Nut (15) aufweisenden Axialseiten einander zugewandt zusammengefügt werden und jede Nut (15, 15') eine Kanalhälfte ausbildet.

8. Hydraulisch dämpfendes Buchsenlager nach einem der Ansprüche 1 bis 7, **dadurch gekennzeichnet, dass** auch in dem elastomeren Dämpfungsglied (4) des Innenlagers Kammern (18) zur Aufnahme eines Dämpfungsmittels ausgebildet und durch den Kanal (20) eines zwischen dem Dämpfungsglied (4) und der Außenhülse (3) des Gummilagers eingeschlossen weiteren Kanalträgers (19) miteinander verbunden sind.

9. Hydraulisch dämpfendes Buchsenlager nach Anspruch 1 oder 8, **dadurch gekennzeichnet, dass** das Innenteil (1) des Gummilagers in der Form eines an zwei gegenüberliegenden Seiten abgeflachten Zylinders ausgebildet ist.

## Claims

1. Hydraulically damping bush bearing, in which an inner rubber bearing, which comprises a substantially cylindrical or approximately cylinder-shaped inner part (1) with an axial through-bore (2), an outer sleeve (3) surrounding the inner part (1) as well as an elastomer damping element (4) disposed between the inner part (1) and the outer sleeve (3) and connected to the inner part (1) and the outer sleeve (3) by vulcanization, is surrounded at its axial ends by chambers (5, 5') for receiving a liquid damping medium, **characterized in that** the chambers (5, 5') are formed by a hydraulic region, which is disposed separately around the rubber bearing and which comprises a rigid channel carrier (6) slipped onto the outer sleeve (3) of the rubber bearing and having a channel (7) for the flow-conducting connection of the chambers (5, 5'), an outer bush (8) supported axially on the channel carrier, and separate means (9, 9') of closing the bush bearing that are disposed axially on both sides of the rubber bearing, wherein the separate means (9, 9') comprise an elastomer, in the radially outer region of which is vulcanised a support ring (12, 12'), via which the outer bush (8) is supported against the channel carrier (6).

2. Hydraulically damping bush bearing according to claim 1, **characterized in that** the means (9, 9') disposed axially on both sides for closing the bush bearing are formed in each case by a cover disc (10, 10'), onto which is vulcanized an elastomer diaphragm (11, 11') extending radially to the outer bush (8), wherein the support ring (12, 12') is vulcanized into an axially extending portion of the diaphragm that lies adjacent to the outer bush (8).

3. Hydraulically damping bush bearing according to claim 2, **characterized in that** the inner part (1) of the rubber bearing has at its axial ends a shoulder (13, 13'), on which the cover discs (10, 10') in the form of a perforated disc are supported by the rim of their bore, which concentrically surrounds the through-bore (2) of the inner part (1).

4. Hydraulically damping bush bearing according to one of claims 1 to 3, **characterized in that** the outer bush (8) is formed by a metal sleeve, which is pressed onto the inner rubber bearing and the channel carrier (6) slipped onto the outer sleeve thereof and which at its axial rims comprises an axial securing device (21).

5. Hydraulically damping bush bearing according to one of claims 1 to 4, **characterized in that** the channel carrier (6) of the hydraulic region that is slipped onto the outer sleeve (8) of the inner bearing is divided in two, wherein by virtue of the degree of twisting of both channel carrier parts (14, 14') relative to one another in the course of manufacture of the bearing the effective channel length and hence the axial damping characteristic of the bush bearing is definable.

6. Hydraulically damping bush bearing according to one claim 5, **characterized in that** the channel carrier (6) of the hydraulic region that is slipped onto the outer sleeve (8) of the inner bearing is divided in two in a plane transversely of the longitudinal axis of the bush bearing, wherein by virtue of the degree of twisting of both channel carrier parts (14, 14') relative to one another in the course of manufacture of the bearing the effective channel length and hence the axial damping characteristic of the bush bearing is definable.

7. Hydraulically damping bush bearing according to claim 6, **characterized in that** the channel carrier (6) of the hydraulic region comprises two rings (14, 14'), into which is incorporated at, in each case, one axial side a groove (15), which in a portion of its course has a through-opening (16, 16') extending axially through the respective ring (14, 14'), wherein for forming the channel carrier (6) the rings (14, 14') are assembled with their axial sides having the groove (15) facing towards one another and each groove (15, 15') forms one channel half.

8. Hydraulically damping bush bearing according to one of claims 1 to 7, **characterized in that** chambers (18) for receiving a damping medium are formed also in the elastomer damping element (4) of the inner bearing and are connected to one another by the channel (20) of a further channel carrier (19), which is enclosed between the damping element (4) and the outer sleeve (3) of the rubber bearing.

9. Hydraulically damping bush bearing according to claim 1 or 8, **characterized in that** the inner part (1) of the rubber bearing is designed in the shape of a cylinder that is flattened at two opposite sides.

## Revendications

1. Palier à coussinet réalisant un amortissement hydraulique, dans lequel un palier intérieur en caoutchouc, qui comporte une partie intérieure (1) essentiellement cylindrique ou ayant approximativement la forme cylindrique et comportant un perçage traversant axial (2), une douille extérieure (3) entourant la partie intérieure (1), ainsi qu'un élément d'amortissement élastomère (4) disposé entre la partie intérieure (1) et la douille extérieure (3) et reliée par vulcanisation à la partie intérieure (1) et à la douille extérieure (3), est entouré au niveau de ses extrémités axiales par des chambres (5, 5') servant à recevoir un moyen fluide d'amortissement, **caractérisé en ce que** les chambres (5, 5') sont formées par une partie hydraulique disposée séparément autour du palier en caoutchouc et qui comporte un support rigide à canal (6) emmanché sur la douille extérieure (3) du palier en caoutchouc et comportant un canal (7) pour établir une liaison réalisant un guidage d'écoulement entre les chambres (5, 5'), un coussinet extérieur (8) prenant appui axialement sur le support à canal et des moyens séparés (9, 9') disposés axialement des deux côtés du palier en caoutchouc servant à fermer le palier à coussinet, les moyens séparés (9, 9') étant réalisés en un élastomère, dans la partie radiale extérieure duquel est fixé par vulcanisation un anneau d'appui (12, 12'), au moyen duquel le coussinet extérieur (8) prend appui sur le support à canal (8).

2. Palier à coussinet réalisant un amortissement hydraulique selon la revendication 1, **caractérisé en ce que** les moyens (9, 9') disposés axialement des deux côtés pour fermer le palier à coussinet sont formés respectivement par un disque de fermeture (10, 10') comportant une membrane élastomère (11, 11') fixée par vulcanisation sur ce disque et s'étendant radialement par rapport au coussinet extérieur (8), l'anneau d'appui (12, 12') étant fixé par vulcanisation dans une partie axiale de la membrane, qui s'applique sur le coussinet extérieur (8).

3. Palier à coussinet réalisant un amortissement hydraulique selon la revendication 2, **caractérisé en ce que** la partie intérieure (1) du palier en caoutchouc comporte, au niveau de ses extrémités axiales, un épaulement (13, 13') sur lequel s'appliquent des disques de fermeture (10, 10') réalisé sous la forme de disques perforés par le bord de leur perçage entourant concentriquement le perçage traversant (2) de la partie intérieure (1).

4. Palier à coussinet réalisant un amortissement hydraulique selon l'une des revendications 1 à 3, **caractérisé en ce que** le coussinet extérieur (8) est formé par une douille métallique qui est emmanchée par pression sur le palier intérieur en caoutchouc et sur le support à canal (6) emmanché sur la douille extérieure de ce palier, et qui possède au niveau de ses bords axiaux, un dispositif de blocage axial (21).

5. Palier à coussinet réalisant un amortissement hydraulique selon l'une des revendications 1 à 4, **caractérisé en ce que** le support à canal (6) de la partie hydraulique, qui est emmanché sur la douille extérieure (8) du palier intérieur, est formé de deux parties, la longueur effective du canal et par conséquent le comportement axial d'amortissement du palier à coussinet pouvant être fixés au moyen du degré de rotation réciproque des deux parties (14, 14') du support à canal pendant la fabrication du palier.

6. Palier à coussinet réalisant un amortissement hydraulique selon la revendication 5, **caractérisé en ce que** le support à canal (6) de la partie hydraulique, qui est emmanché sur la douille extérieure (8) du palier intérieur, est divisé en deux parties dans un plan transversal par rapport à l'axe longitudinal du palier à coussinet, la longueur effective du canal et par conséquent le comportement axial d'amortissement du palier à coussinet pouvant être fixés au moyen du degré de rotation réciproque des deux parties (14, 14') du support à canal pendant la fabrication du palier.

7. Palier à coussinet réalisant un amortissement hydraulique selon la revendication 6, **caractérisé en ce que** le support à canal (6) de la partie hydraulique est constitué de deux anneaux (14, 14') dans lesquels est aménagée, sur respectivement un côté axial, une gorge (15), qui possède sur une section de son étendue, un passage traversant (16, 16'), qui traverse axialement l'anneau respectif (14, 14'), les anneaux (14, 14') étant assemblés avec leurs côtés axiaux possédant la gorge (15), tournés l'un vers l'autre, pour la formation du support à canal (6), et chaque gorge (15, 15') formant une moitié du canal.

8. Palier à coussinet réalisant un amortissement hydraulique selon l'une des revendications 1 à 7, **caractérisé en ce que** des chambres (18) servant à recevoir un moyen d'amortissement sont également formées dans l'élément d'amortissement élastomère (4) du palier intérieur et sont reliées entre elles par le canal (20) d'un autre support à canal (19) enfermé entre l'élément d'amortissement (4) et la douille extérieure (3) du palier en caoutchouc.

9. Palier à coussinet réalisant un amortissement hydraulique selon la revendication 1 ou 8, **caractérisé en ce que** la partie intérieure (1) du palier en caoutchouc est réalisée sous la forme d'un cylindre aplati au niveau de deux côtés opposés.
